(19) Europäisches Patentamt
European Patent Office
Office européen des brevets

(11) Veröffentlichungsnummer: **0 061 025**
**A1**

(12) # EUROPÄISCHE PATENTANMELDUNG

(21) Anmeldenummer: **82101564.1**

(22) Anmeldetag: **01.03.82**

(51) Int. Cl.³: **D 01 F 1/06**
C 08 L 77/00, C 09 B 45/01

(30) Priorität: **12.03.81 DE 3109351**

(43) Veröffentlichungstag der Anmeldung:
**29.09.82 Patentblatt 82/39**

(84) Benannte Vertragsstaaten:
**BE CH DE FR GB IT LI**

(71) Anmelder: **BAYER AG**
**Zentralbereich Patente, Marken und Lizenzen**
**D-5090 Leverkusen 1, Bayerwerk(DE)**

(72) Erfinder: **Laser, Joachim, Dr.**
**Rybnikerstrasse 2**
**D-5000 Koeln 80(DE)**

(72) Erfinder: **Istel, Erich, Dr.**
**Friedrich-Ebert-Strasse 3**
**D-4047 Dormagen(DE)**

(72) Erfinder: **Wolf, Karlheinz, Dr.**
**Paul-Klee-Strasse 77**
**D-5090 Leverkusen(DE)**

(54) **Verfahren zur Spinnfärbung von linearen synthetischen Polyamiden sowie Verfahren zur Herstellung von Lithiumsalzen von Metallkomplexfarbstoffen.**

(57) Verfahren zur Spinnfärbung von linearen synthetischen Polyamiden, dadurch gekennzeichnet, daß man Lithiumsalze von 1:2 Metallkomplexfarbstoffen, wobei diese Salze weniger als 1 Gew.-% im Polyamid unlösliche Bestandteile und weniger als 3 Gew.-% Wasser enthalten, verwendet sowie Verfahren zur Herstellung dieser Lithiumsalze.

EP 0 061 025 A1

0061025

BAYER AKTIENGESELLSCHAFT 5090 Leverkusen, Bayerwerk

Zentralbereich
Patente, Marken und Lizenzen PG-by-c

# Verfahren zur Spinnfärbung von linearen synthetischen Polyamiden sowie Verfahren zur Herstellung von Lithiumsalzen von Metallkomplexfarbstoffen

Die Erfindung betrifft ein Verfahren zur Spinnfärbung von linearen synthetischen Polyamiden mit Lithiumsalzen von 1:2-Metallkomplexfarbstoffen nach diesem Verfahren gefärbte Polyamide sowie ein Verfahren zur Herstellung von Lithiumsalzen von 1:2-Metallkomplexfarbstoffen.

Das neue Verfahren zur Spinnfärbung von linearen synthetischen Polyamiden ist dadurch gekennzeichnet, daß man Lithiumsalze von 1:2-Metallkomplexfarbstoffen wobei diese Salze weniger als 1 Gew.-% im Polyamid unlösliche Bestandteile und weniger als 3 Gew.-% Wasser enthalten, verwendet.

Als 1:2 Metallkomplexfarbstoffe kommen insbesondere 1:2-Chrom- oder 1:2-Kobaltkomplexe von Mono-, Dis-, Polyazo- oder Azomethin-Farbstoffen, die vor der

Metallisierung als metallkomplexbildende Gruppen o,o'-Dioxy, o-Oxy-o'-amino-, o-Oxy-o'-alkoxy-, o-Oxy-o'-carboxy oder o-Alkoxy-o'-amino-azo- oder -azomethingruppen aufweisen, in Frage. Die Farbstoffe können eine oder mehrere saure Gruppen, beispielsweise Sulfonsäure- oder Carbonsäuregruppen tragen, sind aber bevorzugt frei von sauren Gruppen. Die beiden komplexbildenden Farbstoffe, aus denen der 1:2-Metallkomplex aufgebaut ist, können gleich oder verschieden sein; es kann sich auch um Gemische von 1:2-Metallkomplexfarbstoffen handeln, wie sie bei der Mischmetallisierung zweier oder mehrerer zur Komplexbildung befähigter Farbstoffe entstehen. Solche Farbstoffe sind beispielsweise aus den deutschen Patent-, Auslege- bzw. Offenlegungsschriften 870 305, 937 367, 940 483, 945 432, 953 827, 957 506, 960 485, 1 005 644, 1 047 340, 1 049 021, 1 072 338, 1 077 351, 1 191 058, 1 254 785, 1 270 204, 1 444 635, 1 444 655, 1 444 658, 1 544 361, 2 119 830, 1 008 254, 1 012 007, 1 023 539, 1 079 247, 1 111 318, 1 133 846, 1 156 913, 1 265 324, 1 271 857, 1 444 605, 1 544 580, 1 619 649, 1 644 143, 1 902 867, 1 952 305 und 2 210 260, den französischen Patentschriften 1 353 364, 1 380 632, 950 915, 1 161 640, 1 269 496, 1 269 497, 1 272 728, 1 272 729, 1 273 542, 1 352 623, 1 376 128 und 1 518 833, den britischen Patentschriften 988 829 und 995 361 und den belgischen Patentschriften 553 658, 564 094, 553 480, 569 084 und 717 450 sowie aus Houben-Weyl, Methoden der organischen Chemie Band 10/3, Seite 445-450, (1955) und Ullmanns Enzyklopädie der technischen Chemie Band 16, Seite 559-560 (4. Auflage) bekannt.

Bevorzugt eingesetzt werden Lithiumsalze von 1:2-Chromkomplexfarbstoffen oder Farbstoffgemischen, die durch Chromierung eines oder mehrerer Azofarbstoffe der Formel

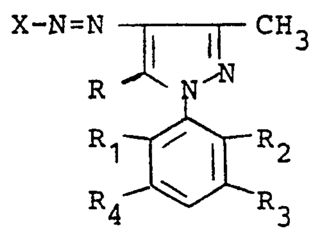

in der

X für einen Rest der Formeln

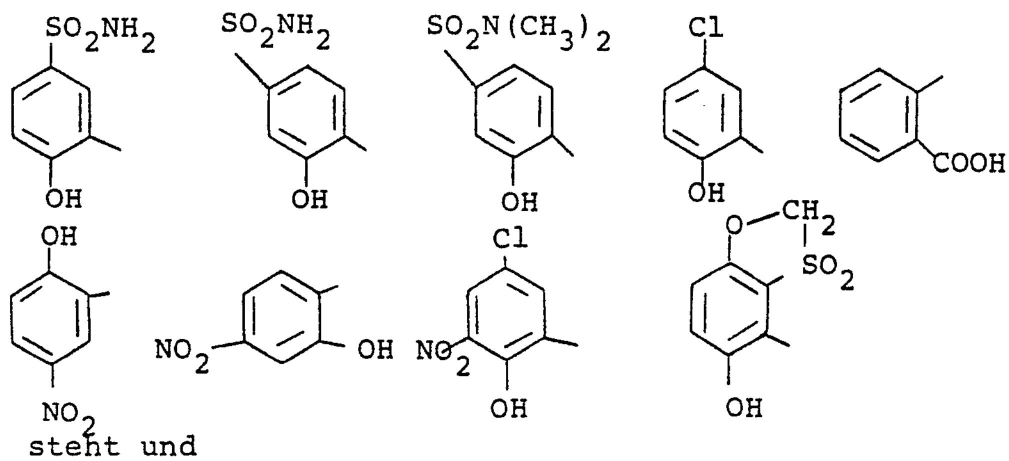

steht und

R -OH,

$R_1$ -H, $-CH_3$,

$R_2$ -H, $-CH_3$, -Cl,

$R_3$ -H, $-SO_2NH_2$, $-NO_2$, -Cl

$R_4$ -H, -Cl bezeichnen oder

$R_1$ und R zusammen eine -N-H-Brücke bilden,

erhalten werden, wobei diese Farbstoffsalze weniger als 1 Gew.-% im Polyamidmaterial unlösliche Bestandteile und weniger als 3 Gew.-% Wasser enthalten.

Ganz besonders bevorzugt eingesetzt werden die Lithiumsalze, von Farbstoffen oder Farbstoffgemischen, die durch Chromierung eines oder mehrerer Farbstoffe der Formeln

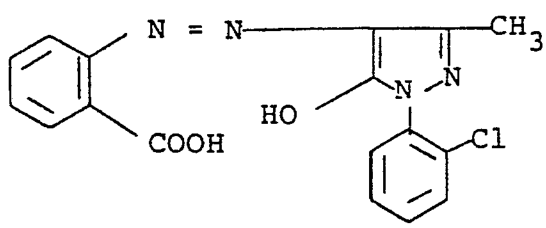

gelber Farbstoff

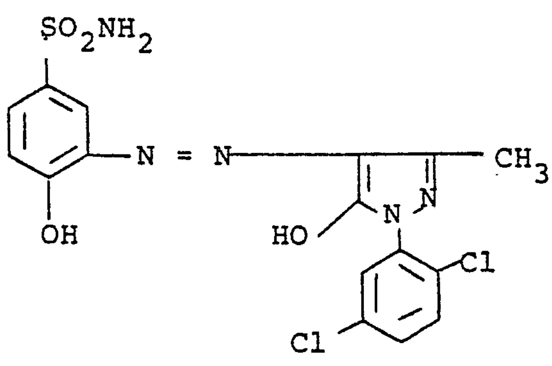

oranger Farbstoff

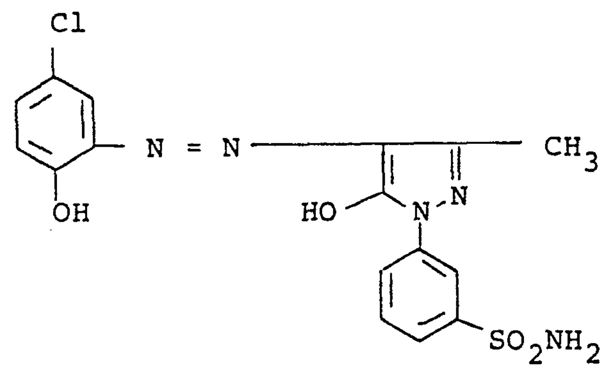

roter Farbstoff

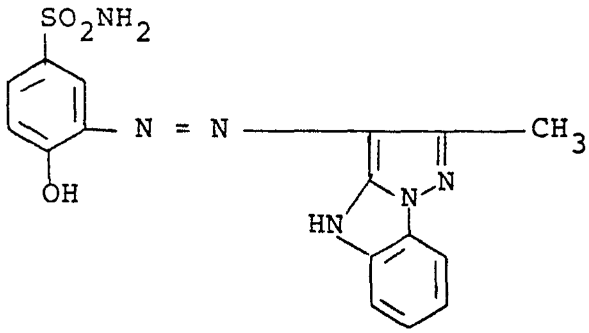

rubinroter Farbstoff

erhalten werden, wobei diese Farbstoffsalze weniger als 1 Gew.-% im Polyamidmaterial unlösliche Bestandteile und weniger als 3 Gew.-% Wasser enthalten.

Vorzugsweise werden solche Lithiumsalze von 1:2-Metallkomplexfarbstoffen verwendet, die weniger als 2 Gew.-% Wasser enthalten.

Weiterhin bevorzugt werden solche Lithiumsalze von 1:2-Metallkomplexfarbstoffen verwendet, die weniger als 0,5 Gew.-% im Polyamid unlösliche Bestandteile enthalten.

Die Erfindung betrifft weiterhin lineare synthetische Polyamide, die unter Verwendung von Lithiumsalzen von 1:2-Metallkomplexfarbstoffen, wobei diese Salze weniger als 1 Gew.-% im Polyamid unlösliche Bestandteile und weniger als 3 Gew.-% Wasser enthalten, spinngefärbt werden.

Zur Herstellung spinngefärbter Gebilde nach dem Schmelzspinnverfahren werden die Lithiumsalze der 1:2-Metallkomplexfarbstoffe in einem Teil des Polyamids zu einem Farbstoffkonzentrat homogen verteilt, dieses Farbstoffkonzentrat wird mit der Hauptmenge des Polyamids vermischt und anschließend diese Masse als Schmelze versponnen.

Die Farbstoffkonzentrate werden derart hergestellt, daß sie vorzugsweise 5-30 Gew.-% Farbstoff enthalten. Zu ihrer Herstellung kann man das Farbstoffpulver mit einem Polyamidgranulat vermischen und das Gemisch in einem beheizten Extruder homogenisieren, wobei man die Farbkonzentrat-Schmelze vorteilhaft zu Granulat verarbeitet. Bei besonders temperaturempfindlichen Farbstoffen kann durch Verwendung von Polyamiden mit vermindertem Molekulargewicht oder durch Verwendung von Mischpolyamiden die Verarbeitungstemperatur im Extruder erheblich vermindert werden.

In einer besonderen Ausführungsform des Verfahrens wird der Farbstoff bzw. das Farbstoff-Gemisch oder

eine Farbstofflösung, in der der Farbstoff in einem mit Polyamid verträglichen Lösungsmittel, beispielsweise Ethylglykol, gelöst ist, unter Luft-Ausschluß in eine zuvor hergestellte Polyamid- oder Mischpolyamidschmelze eingerührt, wobei beim Einsatz der Farbstofflösung das Lösungsmittel wieder verdampft wird und die nach dem Auflösen des Farbstoffes homogene Farbkonzentratschmelze zu Granulat verarbeitet. Bei der Herstellung von Polyamid- oder Mischpolyamidschmelzen können Mattierungs- und/oder Farbpigmente mitverwendet werden. Das Farbstoffkonzentrat-Granulat kann entweder im Gemisch mit gewöhnlichem Polyamidgranulat versponnen oder einer kontinuierlich hergestellten Polyamidschmelze über eine Aufschmelz- und Dosiervorrichtung vor dem Verspinnen beigemischt werden. Allgemein sind in den geformten Gebilden Farbstoff-Gehalte von etwa 0,01 bis etwa 2 Gew.-% erforderlich.

Die Farbstoffkonzentrate können auch im Gemisch mit Mattierungs- oder Farbpigment-Konzentraten verwendet werden. Den Ausgangsstoffen können vor der Polymerisation auch Farb- oder Mattierungs-Pigmente sowie Alterungsschutzmittel, Viskositätsstabilisatoren usw. zugesetzt werden.

Bevorzugt eingesetzte Polyamide sind Poly-$\varepsilon$-caprolactam und das Polykondensationsprodukt aus Hexamethylendiamin und Adipinsäure.

Das erfindungsgemäße Verfahren zur Herstellung von Lithiumsalzen von Metallkomplexfarbstoffen, die weniger als 1 Gew.-% in Polyamid unlösliche Bestandteile und weniger als 3 Gew.-% Wasser enthalten, ist dadurch gekennzeichnet, daß man die 1:2-Metallkomplexfarbstoffe nach der Metallisierung durch Zugabe von Säuren und gegebenenfalls weiteren Hilfsmitteln als Farbstoffsäuren ausfällt, die Farbstoffsäuren beispielsweise durch Absaugen oder Abpressen abtrennt, gegebenenfalls mit Wasser wäscht und anschließend mit alkalisch wirkenden Lithiumverbindungen neutralisiert und das Gemisch bis zu einem Wassergehalt von weniger als 3 Gew.-% trocknet und das Salz gegebenenfalls zu einem Pulver vermahlt. Als Säuren kommen für dieses Verfahren organische Säuren wie Ameisensäure, Essigsäure, oder anorganische Säuren wie Phosphorsäure und Schwefelsäure bevorzugt aber Salzsäure in Betracht; als alkalisch wirkende Lithiumverbindungen werden vorzugsweise Lithiumcarbonat und Lithiumhydroxid eingesetzt. Als Hilfsmittel werden Tenside beispielsweise nichtionogene Tenside wie Oxalkylierungsprodukte von Nonylphenol, Oleylalkohol oder Oleylamin verwendet.

Die Trocknung kann in üblichen Trockenaggregaten wie Sprühtrockner, Walzentrockner, Bandtrockner, Gefriertrockner bevorzugt in Trockenschränken und Schaufeltrocknern im Vakuum erfolgen.

Es ist fereits bekannt, Polyamid mit 1:2-Metallkomplexfarbstoffen nach dem Schmelzspinnverfahren zu färben. Hierbei wurden aber die Natriumsalze eingesetzt, die nach der Herstellung durch Aussalzen mit NaCl isoliert wurden.

Bei den bekannten Verfahren treten jedoch Verarbeitungsschwierigkeiten insbesondere durch Düsenfilterverstopfung beim Verspinnen auf. Das erfindungsgemäße Verfahren vermeidet diese Nachteile.

Beispiel 1

100 g des roten Chromkomplexfarbstoffes der Formel

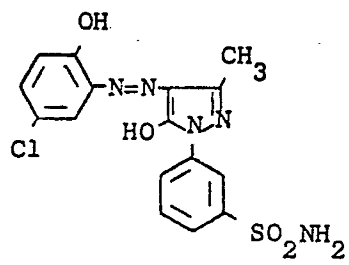

1:2-Chromkomplex

werden aus 5 000 ml der 2 %igen wäßrigen Farbstofflösung, wie sie nach der Metallisierung bei der technischen Synthese anfällt, durch Zugabe von 80 ml 30 %-iger Salzsäure praktisch quantitativ als Farbstoffsäure ausgefällt. Der Filterkuchen enthält 12,5 % Farbstoff, 1 % Natriumchlorid und 86,5 % Wasser. Der feuchte Filterkuchen wird in 3 000 ml dest. Wasser von 80°C verrührt und abermals filtriert. Dieser Vorgang wird nochmals wiederholt. Der so erhaltene feuchte Filterkuchen wird in 300 ml dest. Wasser eingetragen, die entstehende saure Farbstoffsuspension wird mit einer Lösung von 5,2 g Lithiumhydroxid in 52 ml dest. Wasser neutralisiert und anschließend bei 140°C bis zur Gewichtskonstanz getrocknet. Man erhält 98 g eines roten Pulvers, das weitgehend aus dem Lithiumsalz des Chromkomplexfarbstoffs besteht (Wasseranteil: 2 %; in Polyamid unlösliche Bestandteile: 0,1 %).

Beispiel 2

15 Gew.-Teile des Lithiumsalzes, hergestellt nach Beispiel 1 werden mit 85 Gew.-Teilen Polyamid-6-Granulat

(rel. Viskos. 1 g/100 ml in Kresol = 2,70) gemischt und in einem Extruder bei 250°C zu einer homogenen Schmelze und anschließend zu Granulat verarbeitet. Verwendet man ein Polyamid mit der Lösungsviskosität 2,0, so kann die Verarbeitungstemperatur auf etwa 220°C vermindert werden.

6,7 Gew.-Teile dieses Farbstoffkonzentrats werden mit 93,3 Gew.-Teilen Polyamid-6-Granulat gemischt sind in einer auf 260-270°C beheizten Spinnapparatur, die mit einer Mischwalze ausgestattet ist, zu rot gefärbten Fäden mit einem End-Titer von 90/25 versponnen.

Verwendet man ein Gemisch von 0,67 Gew.-Teilen Farbkonzentrat und 99,4 Gew.-Teilen Polyamidgranulat, so erhält man hellrotgefärbte Fäden.

Beispiel 3

100 g eines Gemisches, bestehend aus 94 % des rubinroten Chromkomplexfarbstoffes der Formel

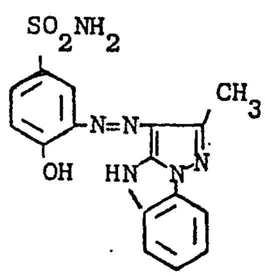

1:2-Chromkomplex

und 6 % Natriumchlorid, wie es bei der technischen Synthese anfällt, wird bei 95°C in 2000 ml dest. Wasser

eingetragen, 2 Stunden bei 95°C verrührt, mit 16,5 g eines handelsüblichen nichtionogenen Dispergiermittels auf Basis Oleylpolyglycolether versetzt, anschließend bei 70°C mit Salzsäure der pH-Wert 1,5 eingestellt und nach 1 Std. der nahezu vollständig ausgefällte Farbstoff als Farbstoffsäure abfiltriert.

Der feuchte Filterkuchen wird in 2 400 ml dest. Wasser von 95°C verrührt und abermals abfiltriert.

De so erhaltene feuchte Filterkuchen wird in 200 ml dest. Wasser von 95°C verrührt, die entstehende saure Farbstoffsuspension wird mit einer Lösung von 4 g Lithiumhydroxid in 40 ml dest. Wasser neutralisiert und anschließend bei 120°C bis zur Gewichtskonzentration getrocknet. Man erhält 87 g eines schwarzroten Pulvers, das weitgehend aus dem Lithiumsalz des Chromkomplexfarbstoffes besteht (Wasseranteil: 1,5 %; in Polyamid unlösliche Bestandteile: 0,1 %).

Bei der Herstellung von Fäden gemäß Beispiel 2 erhält man rubirot gefärbte Fäden.

Patentansprüche

1. Verfahren zur Spinnfärbung von linearen synthetischen Polyamiden, dadurch gekennzeichnet, daß man Lithiumsalze von 1:2-Metallkomplexfarbstoffen, wobei diese Salze weniger als 1 Gew.-% im Polyamid unlösliche Bestandteile und weniger als 3 Gew.-% Wasser enthalten, verwendet.

2. Verfahren gemäß Anspruch 1, dadurch gekennzeichnet, daß man Lithiumsalze von 1:2-Chrom- oder 1:2-Kobaltkomplexen von Mono-, Dis-, Polyazo- oder Azomethinfarbstoffen, die vor der Metallisierung als metallkomplexbildende Gruppen o,o'-Dioxy-, o-Oxy-o'-amino-, o-Oxy-o'-alkoxy-, o-Oxy-o'-carboxy- oder o-Alkoxy-o'-amino-azo- oder -azomethin-Gruppen aufweisen und die saure Gruppen tragen können, verwendet.

3. Verfahren gemäß Anspruch 1, dadurch gekennzeichnet, daß man Lithiumsalze von 1:2-Chromkomplexfarbstoffen oder -farbstoffgemischen, die durch Chromierung eines oder mehrerer Azofarbstoffe der Formel

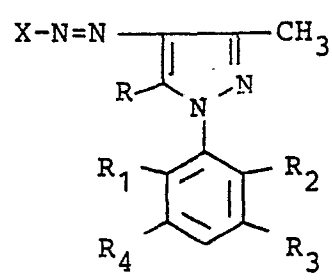

in der X für einen Rest der Formeln

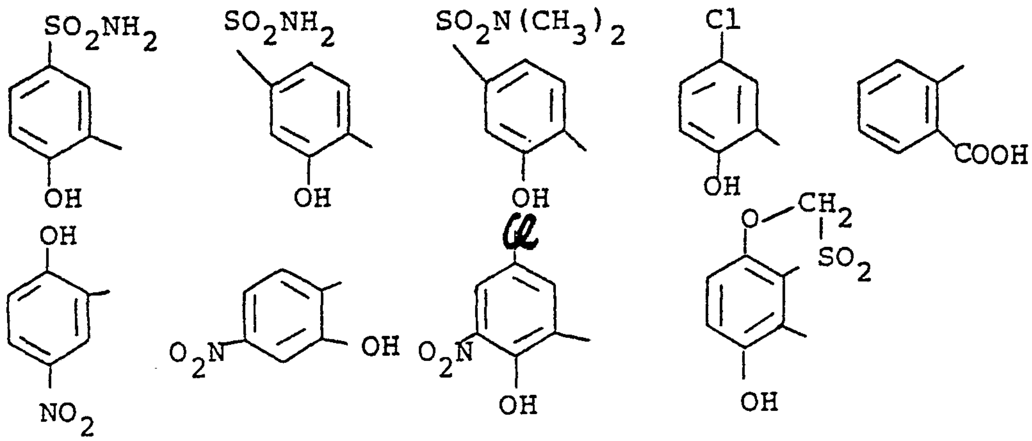

steht und

R -OH,

$R_1$ -H, $-CH_3$,

$R_2$ -H, $-CH_3$, -Cl,

$R_3$ -H, $-SO_2NH_2$, $-NO_2$, -Cl und

$R_4$ -H, -Cl bezeichnen oder

$R_1$ und $R_2$ zusammen eine -N-H-Brücke bilden, verwendet.

4. Verfahren gemäß Anspruch 1, dadurch gekennzeichnet, daß man Lithiumsalze von Farbstoffen oder Farbstoffgemischen, die durch Chromierung eines oder mehrerer Farbstoffe der Formeln

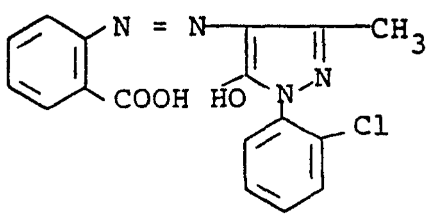

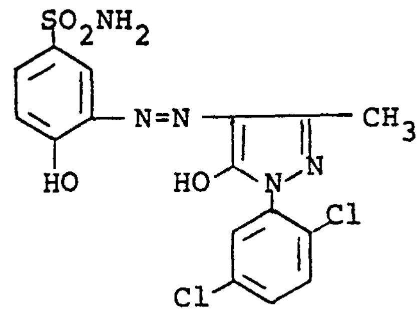

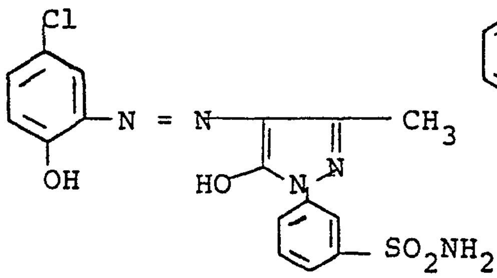

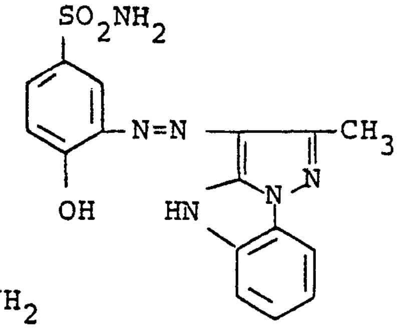

erhalten werden, verwendet.

5. Verfahren gemäß den Ansprüchen 1 bis 4, dadurch gekennzeichnet, daß man Lithiumsalze verwendet, die weniger als 2 Gew.-% Wasser enthalten.

6. Verfahren gemäß den Ansprüchen 1 bis 5, dadurch gekennzeichnet, daß man Lithiumsalze verwendet, die weniger als 0,5 Gew.-% im Polyamid unlösliche Bestandteile enthalten, verwendet.

7. Lineares synthetisches Polyamid, spinngefärbt gemäß den Ansprüchen 1 bis 6.

8. Verfahren zur Herstellung von Lithiumsalzen von 1:2-Metallkomplexfarbstoffen, wobei diese Salze weniger als 1 Gew.-% Polyamid unlösliche Bestandteile und weniger als 3 Gew.-% Wasser enthalten, dadurch gekennzeichnet, daß man 1:2-Metallkomplexfarbstoffe nach der Metallisierung durch Zugabe von Säuren und gegebenenfalls weiteren Hilfsmitteln als Farbstoffsäuren ausfällt, die Farbstoffsäuren abtrennt, gegebenenfalls mit Wasser wäscht, und mit alkalisch wirkenden Lithiumverbindungen neutralisiert und man das Gemisch bis zu einem Wassergehalt von weniger als 3 Gew.-% trocknet und das erhaltene Salz gegebenenfalls zu einem Pulver vermahlt.

0061025

Europäisches Patentamt

# EUROPÄISCHER RECHERCHENBERICHT

Nummer der Anmeldung

EP 82 10 1564

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-1 669 416 (BAYER)<br>--- | | D 01 F 1/06<br>C 08 L 77/00<br>C 09 B 45/01 |
| A | DE-A-1 669 417 (BAYER)<br>----- | | |
| | | | RECHERCHIERTE SACHGEBIETE (Int. Cl. 3) |
| | | | D 01 F<br>C 08 L<br>C 09 B |

Der vorliegende Recherchenbericht wurde für alle Patentansprüche erstellt.

| Recherchenort | Abschlußdatum der Recherche | Prüfer |
|---|---|---|
| DEN HAAG | 22-06-1982 | VAN GOETHEM G.A.J.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument